# EUROPEAN PATENT APPLICATION

(11) **EP 0 892 239 A1**
(43) Date of publication of application: **20.01.1999**
(21) Application number: 98900280.3
(22) Date of filing: 09.01.1998
(51) Int. Cl.: F41B 7/04

(54) **IMPROVED SUBMARINE FISHING GUN**

(30) Priority: 10.01.1997 ES 9700042
(71) Applicant: Cuevas Gomez, Eduardo José, 08293 Collbato (ES)
(72) Inventor: Cuevas Gomez, Eduardo José, 08293 Collbato (ES)
(74) Representative: Carpintero Lopez, Francisco
(86) International application number: ES9800003
(87) International publication number: WO9830858

(57) **Abstract**

The gun is structured so as to shoot two consecutive shots without having to do the arming or cocking between the two shots. To this effect, it has two independent shooting mechanisms connected to two triggers (7), as well as two tubes (2) with different diameters for guiding the harpoons (12). The head part (3) has threaded housings (10) for the corresponding rubber straps, as well as guides (11) for the harpoons (12). The coupling between said head part (3), the tubes (2) and the head part itself which forms the handle plates (1) is achieved by interposing sealing O-rings (4). In each shooting mechanism, there is a part (13) retained in the cocked position by the respective trigger (7), to which part (13) is hinged a lever (16) which is used to arm the corresponding harpoon (12), the lever being pivoted down when pressing on the trigger (7) in order to release the harpoon (12).

## Description

### OBJECT OF THE INVENTION

The invention refers to a gun intended for submarine fishing, which presents as main characteristic the fact that it is capable of shooting two consecutive shots activated by means of respective triggers, each shooting mechanism conceived so as to facilitate the arming of the corresponding harpoon and to permit it to be released with total efficacy.

The object of the invention is to provide a submarine fishing gun capable of shooting two consecutive shots before having to be cocked manually, which are provided with both structurally and operatively simple mechanisms.

### BACKGROUND OF THE INVENTION

In the past, a harpoon was used in submarine fishing which was thrown through the water, the impulsing of the harpoon performed by means of an elastic element, constituted in some cases by a spring with great trajectory which, when the harpoon was armed, compressed the same until it was released when the trigger was activated, and the expansion force of the spring caused the impulsing of the harpoon.

Subsequently, guns appeared which were impulsed by means of compressed air and those impulsed by rubbers, those impulsed by compressed air being based on the fact that the elastic element used up to that moment was changed by air, which, inside a water-tight tank which forms part of the body of the gun, was compressed by a plunger which pushed the harpoon at the moment of the arming, subsequently being released when the shooting trigger was activated.

As regards the impulsion by means of rubbers, it is based on two rubber straps which, after arming the harpoon, are stretched until they hook onto the corresponding notch of the harpoon.

The basic difference between the harpoons impulsed by air and those impulsed by rubbers, is that in the former, the force is provided by an elastic element (spring, compressed air), whilst in the latter case, it is provided by two pulled rubber straps.

Currently, submarine fishing guns generally use rubber straps as impulsing means, and this is due to three main reasons, which consist of the mechanical simplicity versus those which use air; on the scarce maintenance required, and on a considerably lower price.

As regards the structural characteristics of the guns which use rubbers as impulsing element, they are constituted as from handle plates on which the shooting mechanism is housed, completed with a tube which forms the body of the gun and with a head part where the rubber straps are coupled and which serves as guide to the corresponding harpoon.

As regards the mechanisms, the same include cams which, when the gun is armed, the movement of the arming causes an effect on the trigger, this operation producing a considerable force.

That is to say, due to the fact that the mechanisms in existence in the majority of the fishing guns are based on the actuation of cams, given the friction force , a greater force is required to activate the trigger, a force which affects the sensitivity of the actual trigger and in the accuracy of the shot.

Finally, it is worth pointing out, that the submarine fishing guns known at the present moment are constituted in such a manner that they only perform one shot, so that each time the shot is made, it is necessary to carry out once again the manual arming of the same. That is to say, on many occasions, the user has the need, after shooting a piece, of having to return to the boat to collect another gun so as to make a second shot, in order to ensure the piece or to prevent it from escaping.

### DESCRIPTION OF THE INVENTION

The submarine fishing gun which is the object of the invention, presents a series of particularities which may be basically summed up into two main particularities, one of them consists in that the gun is provided with two shots activated by means of respective triggers, though it could include one single trigger which would act on one and the other shooting mechanism.

Likewise, the fact must be indicated, that the gun comprises two guide-tubes for the respective harpoons, though logically it could be equipped with one single tube of greater diameter, for guiding the two harpoons.

As a consequence of the new conception of the gun, a particular mechanism has been provided which is the same for each case, that is to say, that each trigger shall be linked to a similar mechanism as the other so as to make the corresponding shot.

More specifically, the gun of the invention presents the particularity that the head part is equipped with two threaded housings for the respective rubber straps, likewise being provided with the guides for the harpoons and housing for the O-rings which ensure the sealing of said head part in the coupling with the tubes which form the body of the gun, as well as the sealing between the same and the block which constitutes the actual handle plates.

As for the mechanism-carrying part, which is laminar and is placed between the handle plates, it is a piece with orifices for the assembly of the corresponding pins, both of assembly and of the hinging of the shooting mechanisms, and of the assembly and hinging of the actual triggers, said mechanism being constituted by an elongated piece, which, on one of its ends is capable of being lock in cocked position by the corresponding trigger, whilst in the proximity of the opposite hinge end of such a piece, it carries in hinged manner, another small piece which is named from now on, as retention lever of the corresponding harpoon, this lever being kept in a retained position of the harpoon according to the locking or cocking position of the actual piece of the previously indicated mechanism.

The gun is also complemented with a pair of safety devices to prevent the triggers from being unintentionally triggered off, as well as with other accessories and conventional elements, as for instance, attachment clips of the line, the possible support for the line reel and the accessories of the rubber strap, such as the cores and bridges of hinged or fixed type, etc.

In consequence, we are dealing with a submarine fishing gun in which the previously indicated handle plates shall be preferably made of plastic and are attached to the body of the gun, which is formed by two tubes of different diameters as guiding elements of the harpoons, equally including two shooting mechanisms made of stainless steel and which are activated by respective triggers located one in front of the other, though the possibility exists of assembling the mechanisms in such a manner that they are activated with one single trigger, capable of occupying two positions.

As for the tubes, forming part of the body of the gun, they may be of circular or oval cross section, made of inoxidizable material, such as aluminium, carbon fibre, etc., conducting the assembly of said tubes with transversal screws of stainless steel, with the particularity that the union between such tubes, the handle plates and the actual head part, is made in sealed manner by means of the previously indicated O-rings, ensuring the floatability of the gun in the water.

### DESCRIPTION OF THE DRAWINGS

In order to complement the description which is being made, and with the object of helping to a better understanding of the characteristics of the invention, according to a preferred practical embodiment example of the same, a set of drawings is enclosed forming integral part of said description, in which, with illustrative and non limitative character, the following has been represented:

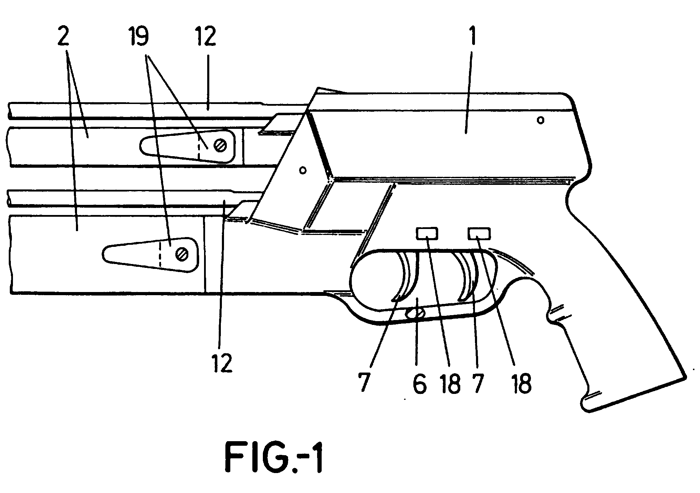

Figure 1 shows a side elevational view of the submarine fishing gun embodied according to the object of the invention, with the tubes, which form part of the same, cut.
Figure 2 shows a partial cross sectional view, leaving the two shooting mechanisms in cocked position, on view.
Figure 3 shows a similar view to that of the previous figure, though in this case, with the mechanisms in shooting position.

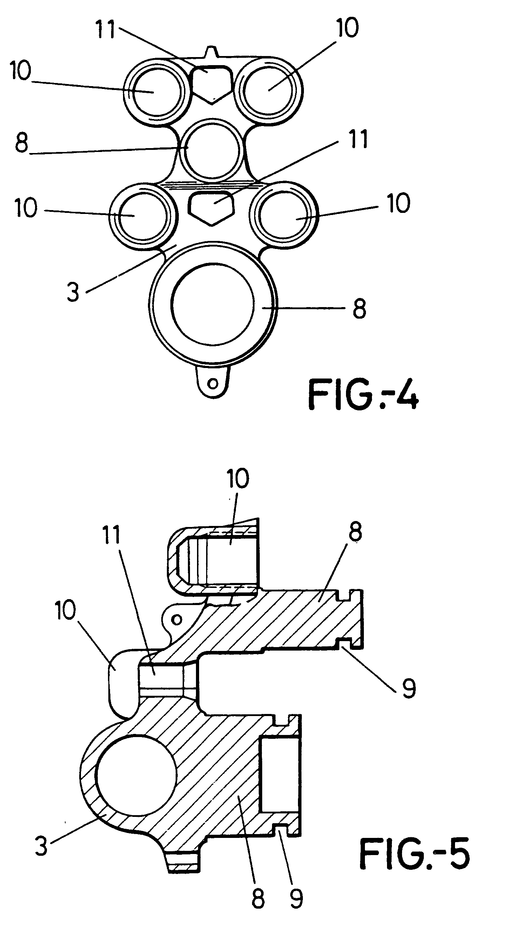

Figure 4 shows a front view of the head part which forms part of the gun of the invention.
Figure 5 shows a cross sectional view of the head part, represented in the previous figure.

### PREFERRED EMBODIMENT OF THE INVENTION

As can be observed in the referred figures, the submarine fishing gun which is the object of the invention, comprises handle plates (1), a body of the gun formed by the tubes (2) with different diameters, and a head part (3), in such a manner, that these three components are joined to each other with the interposing sealing O-rings (4).

The head parts (1) present a conventional configuration to house between them, the piece (5) as support of the corresponding shooting mechanisms which shall be subsequently described, said head parts (1) likewise including the corresponding trigger guards (6) for housing the ends of a pair of triggers (7) placed one in front of the other.

As for the head part (3), besides being provided with the extensions (8) for the coupling of tubes (2) of the body of the gun, extensions (8) which are equipped with throats (9) for placement of the previously indicated sealing O-rings (4), equally include internally threaded housings (10) for the corresponding rubber straps, the threading of said housings (10) capable of being performed by machining, subsequent to the injection or directly injected, since the part which constitutes the head part (3) shall be made of ABS plastic with glass filler and shall be obtained by injection.

Said head part (3) is additionally provided with the guides (11) for the corresponding harpoons (12).

Returning to the handle plates (1), besides housing the mechanism-carrying piece (5), it may be said, that in the same are included respective safety shooting devices (18) to prevent that the triggers (7) may be unintentionally activated, the assembly of said handle plates (1) being equally obtained by injection in ABS plastic with glass filler.

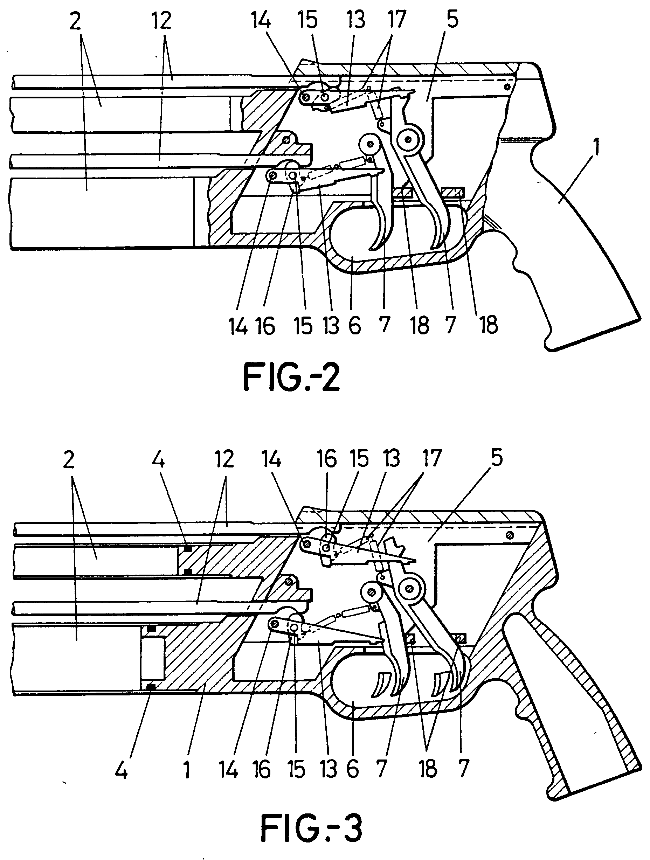

The shooting mechanisms, which are exactly alike to each other, as is represented in figures 2 and 3, include, in each case, an elongated part (13) which on one of its ends shall be linked to the mechanism-carrying piece (5) by means of a pin (14) which acts as turning or pivoting element for said part (13) of the mechanism, to which in turn, a retention lever (16) for the harpoons (12), is pivoted through pin (15), said lever (16) being linked to springs (17) which on their other end are linked to the actual triggers (7).

Said shooting mechanisms are made from stainless steel sheets, obtained by punching on a press by means of cutting and bending dies, whilst the triggers (7) shall be obtained by ABS plastic injection, in like manner to the actual piece (5), support of the previously indicated mechanisms.

As for the tubes (2), which constitute the body of the gun, they shall also be made of inoxidizable material, such as anodized duralumin or any other type of subsequently determined finish, capable of being obtained even in carbon fibre with the purpose of increasing its lightness and stiffness.

It must be finally said that the gun is complemented with other accessories such as clips (19) for attachment of the line, as well as a possible support in the lower tube (2) or of greater diameter for the line reel.

The described gun, besides being provided with two shots, activated by means of respective triggers (7), with two tubes (2) of different section, could have one single trigger with two positions and the corresponding shooting mechanism activated in each one of the same.

As regards the constitution of each one of said shooting mechanisms, it has been confirmed that it is extremely simple, and easily locked in cocking position by means of triggers (7), so that when arming the harpoon (12), said operation shall not cause any movement in the shooting triggers (7), whilst the release of each harpoon (12) shall be produced by the downward movement of the retention lever (16), when said lever is released by the activation of the corresponding trigger (7), which logically releases the part (13) of the mechanism, all of which derives in a sensitivity of the trigger which is superior to that of conventional guns.

## Claims

1. Improved submarine fishing gun, which, being of the type which is constituted by means of the sealed coupling to each other, of a part functioning as handle part (1), a body (2) of the gun and a head part (3), provided with a piece or plate (5) located between the handle plates (1) as support of the shooting mechanism and an activation trigger (7) provided in the corresponding trigger guard (6), and conducting the manual arming of the corresponding harpoon (12), with the collaboration of rubber straps assembled on the actual head part (3), characterized in that the body of the gun is formed by a pair of tubes (2) of different diameters, making possible two consecutive shots before cocking once again, by manual activation, the actual gun; with the particularity, that on the plate (5) placed between the handle plates (1), two equal shooting mechanisms are assembled, independent from each other, associated each one of them, to a trigger (7), each mechanism being constituted as from a part (13) which, on one of its ends and by means of a pin (14) is hinged to the support plate (5), whilst the opposite end is provided with a suitable configuration to be retained in the cocking position by the respective trigger (7), a part (16) being hinged to said part (13) and in the proximity of the pivot (14) of the same, with the function of arming lever of the corresponding harpoon (12), in such a manner, that the release of the part (13) after the activation of the corresponding trigger (7), implies the pivoting downwards of the lever (16), releasing the harpoon (12) for its throwing.

2. Improved submarine fishing gun, according to claim 1, characterized in that the head part (3) is fixed to the piece which constitutes the handle plates (1) and to the actual body of the gun formed by the tubes (2), by means of the interposing of sealing O-rings (4), said head part (3) being provided with the corresponding extensions (8) for the coupling of the tubes (2), throats (9) being made on said extensions (8) for the placement of the sealing O-rings (4), having additionally been provided that said head part (3) be equipped with a pair of guides (11) for the harpoons (12), and of housings (10) with internal thread for the respective rubber straps which collaborate in the arming of the harpoons.
